**Europäisches Patentamt**

(19) **European Patent Office**

**Office européen des brevets**

(11) Publication number: **0 232 125 B1**

(12) **EUROPEAN PATENT SPECIFICATION**

(45) Date of publication of the patent specification:
11.04.90

(21) Application number: **87300753.8**

(22) Date of filing: **28.01.87**

(51) Int. Cl.⁴: **F16L 11/10**

(54) **Ultra-high pressure hose assembly.**

---

(30) Priority: **31.01.86 US 825181**

(43) Date of publication of application:
**12.08.87 Bulletin 87/33**

(45) Publication of the grant of the patent:
**11.04.90 Bulletin 90/15**

(84) Designated Contracting States:
**CH DE FR GB IT LI NL**

(56) References cited:
**DE-A- 2 756 776**
**DE-B- 1 930 589**
**DE-U- 7 008 681**
**US-A- 3 212 528**

(73) Proprietor: **FLOW INDUSTRIES INC., 21414-68th Avenue South, Kent Washington 98031(US)**

(72) Inventor: **Raghaven, Chidambaram, 13834 S.E. Fairwood Boulevard, Renton Washington 98058(US)**
Inventor: **Olsen, John H., Route 5, Box 788, Vashon Washington 98070(US)**

(74) Representative: **Alexander, Thomas Bruce et al, Boult, Wade & Tennant 27 Furnival Street, London EC4A 1PQ(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates generally to an ultra-high pressure hose assembly in which sustained internal fluid pressures are intended to exceed 413.7MPa (60,000 psi) and more particularly to a hose assembly which is designed to operate at sustained pressures in excess of 620.55MPa (90,000 psi) and sustain fatigue capabilities (at least 5000 cycles between 0 to 413.7MPa (60,000 psi)).

In this specification ultra-high pressures are pressures of 413.7MPa (60,000 psi) or greater.

A low pressure fluid conveying hose assembly, for example the garden hose, may be readily provided in a relatively uncomplicated way. For example, a typical garden hose may be made entirely of rubber. Hoses intended for relatively high pressure applications, for example pressures at or about 34.48 to 68.95 MPa (5,000 to 10,000 psi), may require slightly more sophisticated wall structures but are nevertheless relatively uncomplicated in design. However, hoses intended for use in ultra-high pressure applications, for pressures exceeding 413.7 MPa (60,000 psi), have heretobefore been relatively complicated in design, relatively costly to provide and in many cases unreliable in use. A typical ultra-high pressure hose arrangement presently commercially available comprises a load bearing delrin core covered with six layers of round steel wire of diameter 0.304 mm (0.012"). The number of wires in each layer increases from 45 to 61 and they are all wound at a constant helix angle of 53.5°± 1° and adhesives and filament windings are applied between layers. A length of this relatively complicated hose takes many weeks to manufacture. It bursts at about 448.18 MPa (65,000 psi) and might not sustain more than a few cycles between 0 to 413.7 MPa (60,000 psi) and back.

DE-A 2 756 776 (Sucharev and others) discloses an ultra-high pressure hose assembly comprising an inner tubular core which functions as a fluid barrier; a plurality of successive intermediate tubular layers comprising steel wires which are helically wound around and directly against the layer immediately below at predetermined helix angles whereby to form the plurality of tubular layers, the direction of the helix alternating in successive layers, the wires of successive layers -- starting with the innermost tubular layer -- defining successively increasing helix angles; and an outer containment sleeve which contains the tubular layers.

DE-B 1 930 589 (Bridgestone) discloses a hose assembly in which steel wires are used in the reinforcing layers which have flat opposing sides and which are positioned in unconnected edge to edge relationship to one another.

The invention provides an ultra-high pressure hose assembly capable of withstanding sustained internal fluid pressures exceeding 413.7 MPa (60,000 psi), which assembly comprises:

an inner tubular core which functions as a fluid barrier;

a plurality of successive intermediate tubular layers comprising steel wires which are helically wound around and directly against the layer immediately below at predetermined helix angles whereby to form the plurality of tubular layers, the direction of the helix alternating in successive layers, the wires of successive layers -- starting with the innermost tubular layer -- defining successively increasing helix angles; and

an outer containment sleeve which contains the tubular layers;

characterised in that the steel wires have flat opposing sides;

in that each tubular layer comprises individual bands, each band comprising a number of the steel wires which are positioned in unconnected edge to edge relationship to one another so as to form the band;

in that there are eight tubular layers, which for purposes of identification are designated as layers numbers 1 to 8 starting with the innermost layer;

in that the band forming each of the eight tubular layers comprises a specific number of separate steel wires as follows:

| Layer | Wires |
| --- | --- |
| 1 | 20 |
| 2 | 20 |
| 3 | 20 |
| 4 | 20 |
| 5 | 10 |
| 6 | 10 |
| 7 | 5 |
| 8 | 5 |

and in that the band forming each of the eight tubular layers defines a helix angle (in degrees, rounded off to the nearest one-tenth of a degree), as follows:

| Layer | Helix angle |
|---|---|
| 1 | 39.0° |
| 2 | 44.8 |
| 3 | 48.9 |
| 4 | 51.6 |
| 5 | 73.2 |
| 6 | 75.2 |
| 7 | 82.1 |
| 8 | 83.5 |

The inner tubular core can be constructed of any suitable material, for example nylon, polypropylene or PTFE, which will allow it to function as a fluid barrier without adding more than a negligible amount of structural integrity to the overall assembly. The outer sleeve serves to contain the tubular layers and protect these layers from the environment and may be constructed of a suitable plastics material. The plurality of successive intermediate tubular layers provide substantially all of the structural integrity required by the assembly.

Such a hose assembly is capable of operating at sustained fluid pressures exceeding 620.55 MPa (90,000 psi) and having a burst pressure of as high as 668.8 MPa (97,000 psi). Such a hose was subjected to 6000 cycles of pressurisation from zero to 413.7 MPa (60,000 psi) before failing, thereby displaying ultra-high fatigue capabilities.

An ultra-high pressure hose assembly will now be described by way of example and in conjunction with the accompanying drawings wherein:

Fig.1 is a perspective view of an ultra-high pressure hose assembly which is shown partially broken away so as to illustrate its various layers including an innermost tubular sealing core and eight successive tubular structural layers;

Figs. 2A, 2B and 2C diagrammatrically illustrate certain aspects of a first, sixth and seventh tubular layers forming part of the overall assembly of Fig. 1;

Fig. 3 diagrammatically illustrates a segment of the hose assembly of Fig. 1 in longitudinal section; and

Fig. 4 diagrammatically illustrates an overall assembly for manufacturing the hose of Figs. 1 to 3.

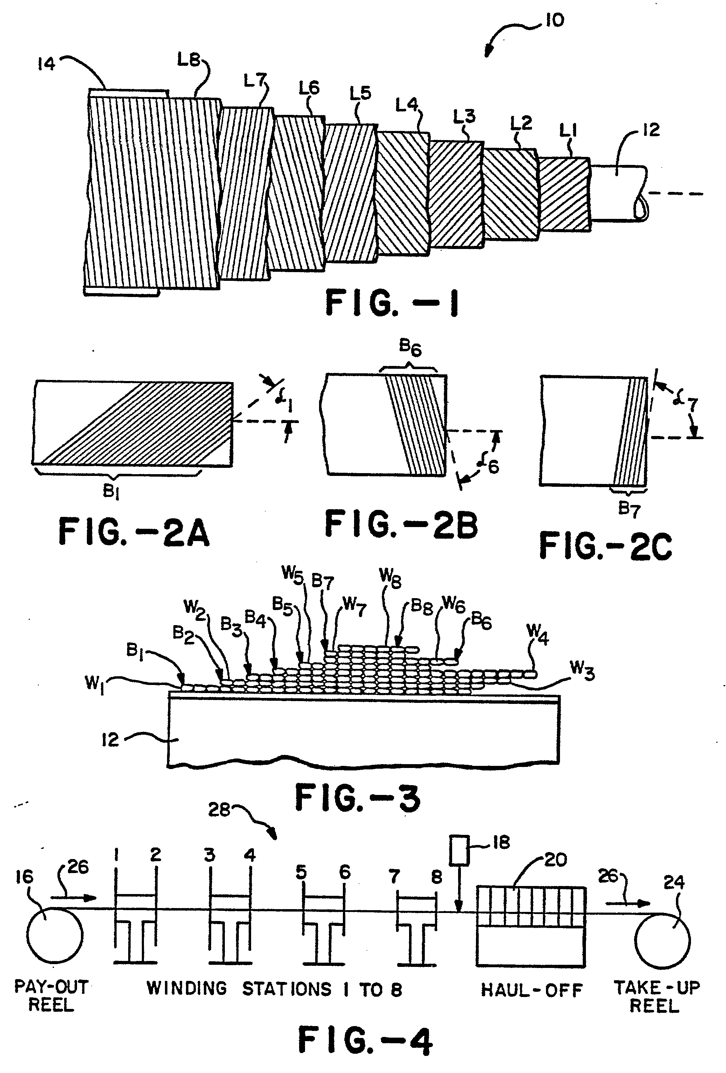

Turning now to the drawings, wherein like components are designated by like reference numerals throughout the various figures, attention is first directed to Fig. 1 which illustrates an ultra-high pressure hose assembly 10. This assembly is shown including an inner tubular core 12, eight successive intermediate structural tubular layers which are designated as layers L1 to L8, starting with the innermost layers L1, and an outer containment sleeve 14. The inner tubular core 12 can be constructed of any suitable material, for example nylon, which allows it to function as a fluid barrier at the operating pressures of the assembly without adding more than at most negligible structural integrity to the overall assembly and the operating pressure of the assembly. In fact, the inner core 12 should be sufficiently resilient, flexible or deformable so as to readily expand outward when subjected to the ultra-high internal pressures of the overall assembly. In that way, most of the loading will be transferred through it to the structural layers L1 to L8 which are designed to take such loads. If this were not the case, the core 12 might burst prematurely under such ultra-high pressures. At the same time, when the assembly is at ambient pressure, the core 12 along with the sleeve 14 serves to hold it together structurally. The outer containment sleeve 14 also serves as a means of protecting the tubular layers L1 to L8 from the ambient surroundings and also keeps the tubular layers in place when the hose is cut at some point. Without the sleeve 14, these tubular layers L1 to L8 might spring out. The outer sleeve 14, like the inner core 12, is not intended to add any appreciable structural integrity to the overall hose assembly at the operating pressure of the assembly but should be sufficiently resilient or flexible to ensure that the overall hose is flexible.

The eight intermediate tubular layers L1 to L8 are constructed entirely of steel and provide all of the structural integrity required by the assembly so as to allow the latter to operate at its ultra-high pressures.

The successive intermediate tubular layers L1 to L8 respectively comprise individual bands which are alternately helically wound around and directly against the layers immediately below them at predetermined helix angles. Whilst these bands are generally illustrated in Figures 1 and 3, the bands forming layers L1, L6 and L7 are more clearly illustrated in Figures 2A, 2B and 2C, respectively. The band forming layer L1 is generally indicated at B1 in Figure 2A, the band forming layer L6 is generally indicated at B6 in Figure 2B and the band forming layer L7 is generally indicated at B7 in Figure 2C. Note that the bands B1 and B7 are wrapped from left to right starting from the bottom, as viewed in Figures 2A and 2C while band B6 is wrapped from right to left. When it is stated herein that the bands are alternately helically wound around and directly against layers immediately below them what is meant is that the first band B1 is wound in one direction, for example from left to right as viewed in Figure 2A, the second band B2 (see Figure 3) is wound in the opposite direction, for example from right to left, the third band B3 is wound from left to right, and so on. In other words, one band is wound clockwise and the next band is wound anticlockwise. The term "helix angle" used herein refers to the angle at which a given band is wound with respect to the axis of its tubular layer. First, as illustrated in Figure 2A, the band B1 is wound around the layer below it at a helix angle of α. As illustrated in Figures 2B and 2C, the bands B6 and B7 define helix angles α 6 and α 7, respectively. As generally illustrated in Figure 1, the bands of successive layers starting with band B1 define successively increasing helix angles for reasons to be discussed hereinafter. Thus, α1 is smaller than α2 which is smaller than α3 and so on.

Each band B1 to B8 forming its respective intermediate tubular layer L1 to L8 comprises a number of separate steel wires which in cross-section have opposing flat sides with opposed rounded edges and which are positioned in unconnected edge to edge relationship to one another so as to form the band, as best illustrated in Figure 3. Thus, the band B1 comprises a plurality of wires W1, the band B2 comprises a plurality of wires W2 and so on to wires W8 which make up band B8. Preferably, the wires are identical in cross-sectional configuration. In an actual working construction, each wire was 0.3175 mm (12.5 mils) thick and 0.8128 mm (32 mils) wide (at the widest points). These wires should have flat sides and the wires forming any given band should be of the same thickness. In that way, the wires of any given band can be made to rest in surface to surface (side-to-side) contact with the wires above and below them. At the same time they engage one another in edge to edge relationship so as to minimise any gaps between adjacent wires in the same band. Advantages of these positional features will be discussed below.

As can best be seen in Figure 3, not all of the bands making up the various intermediate tubular layers L1 to L8 include the same number of separate wires W. The number of wires forming each band is dictated in large part by the helix angle that that band defines. A band defining a relatively small helix angle will generally require more individual wires than a band defining a relatively large helix angle if the gaps between the wires are to be kept at a minimum. In the illustration, each of the first four bands B1 to B4 comprises twenty separate wires while the next two bands B5 and B6 each comprises ten separate wires and the outer two layers each comprises five separate wires. The bands forming layers L1 to L8 define helix angles (in degrees rounded off to the nearest one-tenth of a degree), as previously set forth.

As stated above, the hose assembly 10 is designed for ultra-high pressure applications. In order to accomplish this while retaining the assembly's simplicity of design, all of the structural intermediate tubular layers L1 to L8 should share substantially in the overall loading of the assembly at its operating pressure and a single layer should not be unnecessarily subjected to excessive stress. The various intermediate tubular layers L1 to L8 are made to more uniformly share the operating load by being designed to define successively increasing helix angles, starting with the innermost layer L1. This is in contrast with a design in which all of the layers are wound at the same helix angle or where the inner layers are wound more tightly (for example, at greater helix angles) than outer layers. In both of these latter cases, the innermost layer or layers take up most if not all of the load of the assembly and the outer layers contribute little to the assembly's structural integrity. As a result, the innermost layer will tend to break first thereby exposing the next layer which then will break, and so on until the entire assembly bursts. By winding the innermost layer loosely (for example, at relatively small helix angles) and successively increasing helix angles with successive layers, the innermost layer is allowed to expand radially outwardly in response to its load to a greater extent than the second layer and this latter layer is allowed to expand outwardly to a greater extent then the third layer, and so on. That way, the load is shared more evenly between the various layers. In an actual working construction which will be defined in more detail hereinafter and which comprised inner core 12 and the eight layers L1 to L8 illustrated in Figure 1, (each defining an associated helix angle referred to above), there was no more than about an 8% mean drop in tension between adjacent layers L1 to L8 at the operating pressure of the assembly.

The tubular layers L1 to L8 should define successively increasing helix angles as discussed above and the wires of any given layer should engage the wires below them and the wires above them in surface-to-surface contact. This is to be contrasted with point-to-point contact which results when wires having circular cross sections are used. In this latter case, due to the operating pressures of the assembly, the round wires of the innermost layer tend to cut into the wires of the next outer layer, as a "wire cutter" might do, thereby causing the wires forming the second layer to break sooner than they would if the contacting surfaces between the two layers were flat, as in the surface-to-surface contact achieved by using flat wires. In addition, because of the point-to-point contact between these adjacent layers of "round" wires, the innermost layer tends to deform further into the next outer layer and therefore it tends to extend radially outwardly more so than would be the case with flat wires. As a result, the inner layer is subjected to greater stress than would be the case if it did not deflect so far outwardly.

In view of the ultra-high pressures to which assembly 10 is to be subjected any gap between adjacent wires in a given layer should be minimised and preferably substantially eliminated. This is particularly important with respect to the innermost ones of the tubular layers, specifically layers L1 to L4. These gaps may be kept to a minimum or virtually eliminated by appropriately selecting the number of wires making up a given band in view of the helix angle that band is to define. If a gap is present in, for example, layer L2 at the ultra-high operating pressures of the assembly, the individual wires which lie directly under that gap in layer L1 stand unsupported into the gap and can ultimately break prematurely at that point.

While substantial elimination of any gaps between adjacent wires for the reasons just recited is desirable, the overall assembly can be made substantially more flexible if the bands of layers L7 and L8 are helically wound with substantially greater gaps between turns than the gaps between turns of layers L1 to L6. Specifically, in the case where gaps are substantially eliminated from all eight layers, a given section of the overall hose assembly, for example, a section 1.6 m (63 inches) long, can be easily bent to a radius of curvature of 0.5 m (20 inches). By providing gaps in the outer two layers L7 and L8 approximately 0.254 mm (10 mils) in width, the same section of the hose assembly can be readily bent to a radius of curvature 0.279 m (11 inches).

Overall, the ultra-high pressure hose assembly 10, described as including inner tubular core 12, outer containment sleeve 14, and the specifically described tubular layers L1 to L8, is relatively simplistic in design and economical to provide. At the same time, as discussed above the assembly is reliable at ultra-high pressures because these particular layers are made to co-operate with one another: (1) to more uniformly distribute the load between layers; (2) to prevent any given layer from bending radially outwardly to a greater degree than necessary and thereby cut into the adjacent outer layer, either breaking in the process or causing the adjacent layer to break; and (3) to prevent one of the inner tubular layers from expanding into gaps in the adjacent outer layers.

An actual constructed hose assembly is described in more detail below in conjunction with the accompanying Table. The liner or core is constructed of nylon and each tubular layer is constructed of a plurality of steel wires. The outer containment sleeve was omitted for purposes of simplicity and would have at most a negligible effect on the data in the Table. As indicated above, the purpose of the sleeve is not structural other than to contain the tubular layers and as a means of protection.

The measurement for circumference minus wire coverage has been provided and represents the gap between adjacent wires. The pitch represents the distance along the hose axis covered by one complete turn of a spiral. Solidity refers to the minimum pitch (possible) divided by the actual pitch. The helix angles are measured to ten-thousandths of a degree. Variations even with these fine measurements may have a significant effect on the overall operating characteristics of the assembly. The hose assembly described by the Table displayed a burst pressure which exceeded 668.8 MPa (97,000 psi) operated at sustained pressures in excess of 648.1 MPa (94,000 psi). The various layers L1 to L8 shared substantially in the overall loading, as indicated by the tension in each layer. The tension only drops off slightly in each of the first four layers, and, in fact, increases in layer 5.

Table

| | | Liner | Layer | | | | | | | |
| | | | 1 | 2 | 3 | 4 | 5 | 6 | 7 | 8 |
|---|---|---|---|---|---|---|---|---|---|---|
| Outside diameter | mm | 6.35 | 6.985 | 7.62 | 8.433 | 9.068 | 9.703 | 10.338 | 10.973 | 11.608 |
| | inches | 0.25 | 0.275 | 0.3 | 0.332 | 0.357 | 0.382 | 0.407 | 0.432 | 0.457 |
| Wire thickness | mm | | 0.3175 | 0.3175 | 0.3175 | 0.3175 | 0.3175 | 0.3175 | 0.3175 | 0.3175 |
| | inches | | 0.0125 | 0.0125 | 0.0125 | 0.0125 | 0.0125 | 0.0125 | 0.0125 | 0.0125 |
| Inside diameter | mm | 4.826 | 6.35 | 6.985 | 7.798 | 8.433 | 9.068 | 9.703 | 10.338 | 10.973 |
| | inches | 0.19 | 0.25 | 0.275 | 0.307 | 0.332 | 0.357 | 0.382 | 0.407 | 0.432 |
| Wire width | mm | | 0.813 | 0.813 | 0.813 | 0.813 | 0.813 | 0.813 | 0.813 | 0.813 |
| | inches | | 0.032 | 0.032 | 0.032 | 0.032 | 0.032 | 0.032 | 0.032 | 0.032 |
| Average diameter | mm | | 6.6675 | 7.3025 | 8.1153 | 8.7503 | 9.3853 | 10.0203 | 10.6553 | 11.2903 |
| | inches | | 0.2625 | 0.2875 | 0.3195 | 0.3445 | 0.3695 | 0.3945 | 0.4195 | 0.4445 |
| Circumference | mm | | 20.94662 | 22.94153 | 25.49499 | 27.48991 | 29.48483 | 31.47974 | 33.4747 | 35.46958 |
| | inches | | 0.82467 | 0.90321 | 1.00374 | 1.08228 | 1.16082 | 1.23936 | 1.3179 | 1.39644 |
| Wire coverage | mm | | 20.90445 | 22.92147 | 24.73223 | 26.18791 | 28.051 | 31.85566 | 29.4742 | 35.87344 |
| | inches | | 0.82301 | 0.90242 | 0.97371 | 1.03102 | 1.10437 | 1.25416 | 1.1604 | 1.41234 |
| Helix angle | radians | | 0.6799 | 0.78243 | 0.85359 | 0.9011 | 1.27682 | 1.31279 | 1.43247 | 1.45726 |
| | degrees | | 38.9555 | 44.8297 | 48.9072 | 51.6294 | 73.1564 | 75.2173 | 82.0744 | 83.495 |
| Pitch | mm | | 25.908 | 23.07819 | 22.23491 | 21.76526 | 8.92632 | 8.30707 | 4.66014 | 4.04419 |
| | inches | | 1.02 | 0.90859 | 0.87539 | 0.8569 | 0.35143 | 0.32705 | 0.18347 | 0.15922 |
| Elastic Modulus | GPa | $6.895 \times 10^{-6}$ | 206.85 | 206.85 | 206.85 | 206.85 | 206.85 | 206.85 | 206.85 | 206.85 |
| | psi | 1 | 3E + 07 | 3E + 07 | 3E + 07 | 3E + 07 | 3E + 07 | 3E + 07 | 3E + 07 | 3E + 97 |
| Number of wires | | | 20 | 20 | 20 | 20 | 10 | 10 | 5 | 5 |
| Minimum pitch | mm | | 25.85568 | 23.05812 | 21.56968 | 20.73427 | 8.49224 | 8.40613 | 4.10312 | 4.09042 |
| | inches | | 1.01794 | 0.9078 | 0.8492 | 0.81631 | 0.33434 | 0.33095 | 0.16154 | 0.16104 |
| Solidity | | | 0.99799 | 0.99913 | 0.97008 | 0.95264 | 0.95137 | 1.01194 | 0.88049 | 1.01139 |
| Poisson ratio | | 0.4811 | 0.3 | 0.3 | 0.3 | 0.3 | 0.3 | 0.3 | 0.3 | 0.3 |
| Diameter growth | mm | 0.34036 | 0.26391 | 0.20599 | 0.15900 | 0.12014 | 0.08687 | 0.06325 | 0.04623 | 0.03378 |
| | inches | 0.0134 | 0.01039 | 0.00811 | 0.00626 | 0.00473 | 0.00342 | 0.00249 | 0.00182 | 0.00133 |
| Diameter strain | | | 0.03958 | 0.0282 | 0.01958 | 0.01372 | 0.00924 | 0.00631 | 0.00435 | 0.00299 |
| Length strain | | −0.0094 | −0.0094 | −0.0094 | −0.0094 | −0.0094 | −0.0094 | −0.0094 | −0.0094 | −0.0094 |
| Wire strain | | | 0.00996 | 0.00929 | 0.00706 | 0.00481 | 0.00768 | 0.00529 | 0.00409 | 0.00283 |

Table (cont.)

| | | Liner | Layer 1 | 2 | 3 | 4 | 5 | 6 | 7 | 8 |
|---|---|---|---|---|---|---|---|---|---|---|
| Tension | Newtons | | 491.339 | 464.514 | 352.485 | 236.956 | 398.08 | 275.928 | 215.539 | 151.219 |
| | pounds f. | | 110.463 | 104.432 | 79.2458 | 53.2725 | 89.4963 | 62.0341 | 48.4574 | 33.997 |
| Inter-layer pressure | MPa | 665.793 | 648.518 | 521.275 | 403.34 | 316.293 | 256.488 | 151.715 | 80.2557 | 33.8593 |
| | psi | 96561.7 | 94056.3 | 75601.9 | 58497.5 | 45872.8 | 37199.2 | 22003.6 | 11639.7 | 4910.71 |
| Outer diameter growth | mm | 0.03378 | | | | | | | | |
| | inches | 0.00133 | | | | | | | | |
| Outer diameter growth rate | mm$^3$N$^{-1}$ | 0.8842 | | | | | | | | |
| | inches$^3$/pound | 0.00024 | | | | | | | | |
| Step | mm | 0.0094 | | | | | | | | |
| | inches | 0.00037 | | | | | | | | |
| Additional displacement | μm | | 2.489 | 1.93 | 1.524 | 1.219 | 0.7366 | 0.381 | 1.626 | 0 |
| | inches | | 9.8E−05 | 7.6E−05 | 6E−05 | 4.8E−05 | 2.9E−05 | 1.5E−05 | 6.4E−05 | 0 |
| Axial tension compression | Newtons | −963.35 | 7641.66 | 6588.73 | 4633.62 | 2941.78 | 1153.46 | 704.029 | 148.596 | 85.6555 |
| | pounds f. | −217.48 | 1718 | 1481.28 | 1041.73 | 661.371 | 259.322 | 158.28 | 33.4073 | 19.2571 |
| Applied tension | Newtons | 57.9512 | 26762.1 | | | | | | | |
| | pounds f. | 13.0286 | 6016.67 | Bore Force | | | | | | |
| Wire tension relief | Newtons | | −40.353 | −31.224 | −24.485 | −19.855 | −11.744 | −6.213 | −2.6212 | 0 |
| | pounds f. | | −9.0722 | −7.0197 | −5.5047 | −4.4639 | −2.6404 | −1.3968 | −0.5893 | 0 |
| | μ Newtons | | 329.15 | 0 | 0 | 0 | 489.28 | 489.28 | 533.76 | 533.76 |
| | pounds f. | | 7.4E−05 | 0 | 0 | 0 | 0.00011 | 0.00011 | 0.00012 | 0.00012 |
| Breaking tension | Newtons | 534.983 | | | | | | | | |
| | pounds f. | 120.275 | | | | | | | | |
| Safety factor | | | 1.0067 | 1.08449 | 1.44828 | 2.17394 | 1.31441 | 1.91634 | 2.46992 | 3.53781 |
| Minimum safety factor | | 1.0067 | | | | | | | | |
| Burst pressure | MPa | 670.251 | 0.484741 | | | | | | | |
| | psi | 97208.2 | 70.3032 | Moment | | | | | | |
| Winding direction | | | 1 | −1 | 1 | −1 | 1 | −1 | 1 | −1 |
| Winding moment | Nm | | 0.06707 | −0.06178 | 0.09786 | −0.10977 | 0.07186 | −0.07751 | 0.04221 | −0.04487 |
| | inch grams | | 2640.62 | −02432.3 | 3852.64 | −4321.5 | 2829.19 | −3051.5 | 1661.97 | −1766.6 |

EP 0 232 125 B1

Table (cont.)

| | | Liner | Layer | | | | | | | |
|---|---|---|---|---|---|---|---|---|---|---|
| | | | 1 | 2 | 3 | 4 | 5 | 6 | 7 | 8 |
| Twisting moment | Nm | | 20.5969 | −23.9143 | 21.5582 | −16.2566 | 17.8791 | −13.3666 | 5.68673 | −4.24079 |
| | inch pounds f. | | 182.307 | −211.67 | 190.816 | −143.89 | 158.251 | −118.31 | 50.3343 | −37.536 |
| | | | 0.113736 | 0.122525 | 0.163626 | 0.24561 | 0.148501 | 0.216507 | 0.27905 | 0.399699 |
| | | | 1.0067 | 1.08449 | 1.44828 | 2.17394 | 1.31441 | 1.91634 | 2.46992 | 3.53781 |
| | | | 12.48 | 11.7986 | 8.95313 | 6.01868 | 10.1112 | 7.00856 | 5.47468 | 3.84095 |
| | | | 110.463 | 104.432 | 79.2458 | 53.2725 | 89.4963 | 62.0341 | 48.4574 | 33.997 |
| Circumference minus wire | mm | | 0.04216 | 0.020076 | 0.76276 | 1.302 | 1.4338 | −1.27 | 1.27 | 1.27 |
| coverage | inches | | 0.00166 | 0.00079 | 0.03003 | 0.05126 | 0.05645 | −0.0500 | 0.0500 | 0.0500 |
| | | | 0.04166 | 0.01981 | 0.7557 | 1.2898 | 1.4204 | −0.37338 | 3.9629 | −0.40132 |
| | | | 0.00164 | 0.00078 | 0.02975 | 0.05078 | 0.05592 | −0.0147 | 0.15602 | −0.0158 |
| Winding tension | Newtons | | 1.6 | 1.2 | 1.6 | 1.6 | 1.6 | 1.6 | 1.6 | 1.6 |
| | grams | | 1600 | 1600 | 1600 | 1600 | 1600 | 1600 | 1600 | 1600 |

A method of manufacturing the hose asesmbly illsutrated in Figures 1 to 3, will now be described. Turning specifically to Figure 4, the core 12 which is initially manufactured by any suitable means is stored on a pay out reel 16 supported by suitable means (not shown) at the beginning of the manufacturing line. An initial length of the core 12 is drawn through eight winding stations generally indicated by station numbers 1 to 8, past a winding securement station 18, through a haul off station 20 and finally to a take-up reel 24. The haul off station 20 serves to pull the core and its associated windings in the direction indicated by arrows 26 and around the take-up reel 24. The overall manufacturing apparatus which is generally indicated by the reference numeral 28 is designed to manufacture discrete lengths of a hose assembly, for example 304.8 m (1000 foot) lengths.

After a lead section of core material is threaded through the winding and haul off stations and connected to the take-up reel 24, the overall apparatus is ready to manufacture a given length of hose assembly. This is accomplished by drawing the core through the various stations in the direction of arrow 26. As this is done, the first winding station number 1 utilises a readily available machine to automatically wind layer L1, which, as indicated above, comprises 20 wires, around the core at a helix angle $\alpha1$. Thereafter, layer L2 is wound around layer L1 by a suitable winding machine at station 2 at a helix angle $\alpha2$, and so on, until all eight layers L1 to L8 are wound, one around the other, over core 12. Station 18 provides a suitable and readily providable machine to temporarily wind Kevlar string or other suitable string means around the front or upstream end of the cable assembly as it passes from station 8 and the downstream end in order to temporarily hold the ends in place and therefore temporarily contain the layers in position around the core. This overall hose assembly is then wound around the take-up reel 24. Thereafter, the outer containment sleeve 14 is formed over the outermost tubular layer L8 by any suitable means. The outer containment sleeve may be extruded from a conventional extrusion apparatus directly over the outer layer L8. At that time, the ends of the overall assembly including the temporary winding strings can be severed from the assembly.

## Claims

1. An ultra-high pressure hose assembly (10) capable of withstanding sustained internal fluid pressures exceeding 413.7 MPa (60, 000 psi), which assembly comprises:

an inner tubular core (12) which functions as a fluid barrier;

a plurality of successive intermediate tubular layers (L1 to L8) comprising steel wires (W) which are helically wound around and directly against the layer immediately below at predetermined helix angles ($\alpha$) whereby to form the plurality of tubular layers (L), the direction of the helix alternating in successive layers, the wires (W) of successive layers (L) – starting with the innermost tubular layer – defining successively increasing helix angles ($\alpha$); and

an outer containment sleeve (14) which contains the tubular layers (L);

characterised in that the steel wires (W) have flat opposing sides;

in that each tubular layer (L) comprises individual bands (B), each band (B) comprising a number of the steel wires (W) which are positioned in unconnected edge to edge relationship to one another so as to form the band;

in that there are eight tubular layers (L), which for purposes of identification are designated as layers numbers 1 to 8 starting with the innermost layer;

in that the band (B) forming each of the eight tubular layers (L) comprises a specific number of separate steel wires (W) as follows:

| Layer | Wires |
| --- | --- |
| 1 | 20 |
| 2 | 20 |
| 3 | 20 |
| 4 | 20 |
| 5 | 10 |
| 6 | 10 |
| 7 | 5 |
| 8 | 5 |

and in that the band (B) forming each of the eight tubular layers (L) defines a helix angle ($\alpha$) (in degrees, rounded off to the nearest one-tenth of a degree), as follows:

| Layer | Helix angle |
|-------|-------------|
| 1 | 39.0° |
| 2 | 44.8 |
| 3 | 48.9 |
| 4 | 51.6 |
| 5 | 73.2 |
| 6 | 75.2 |
| 7 | 82.1 |
| 8 | 83.5 |

2. An ultra-high pressure hose assembly as claimed in claim 1, characterised in that at least the bands (B) of the layers (L) numbered 1 to 6 are helically wound with substantially no gaps between turns.

3. An ultra-high pressure hose assembly as claimed in claim 1 or 2, characterised in that the band (B) of the layers numbered 7 and 8 are helically wound with substantially greater gaps between turns than the gaps between the turns of the layers numbered 1 to 6.

4. An ultra-high pressure hose assembly as claimed in any preceding claim, characterised in that the plurality of tubular layers (L) comprise a predetermined number which are configured to define specific helix angles ($\alpha$) such that the overall burst pressure of the assembly exceeds 620.55 MPa (90,000 psi).

5. An ultra-high pressure hose assembly as claimed in any preceding claim, characterised in that the tubular layers (L) are configured so that, at the operating pressure of the assembly the tension in the wires (W) comprising each of the layers (L), is such that there is no more than about an 8% mean drop in tension between adjacent layers (L), whereby all of the layers (L) share substantially in the overall loading of the assembly at its operating pressure.

6. An ultra-high pressure hose assembly as claimed in any preceding claim, characterised in that the core (12) is constructed of nylon, polypropylene or PTFE material and the sleeve is constructed of a plastics material.

7. An ultra-high pressure hose assembly as claimed in any preceding claim, characterised in that each of the wires (W) forming each of the bands (B) has a thickness of 0.3175 mm (0.0125 inch) and a width of 0.8128 mm (32 mils).

8. A method of making an ultra-high pressure hose assembly as claimed in any preceding claim comprising the steps of:

(a) providing the core (12) and supporting the latter on a pay out reel (16);

(b) drawing the core (12) through a plurality of successive winding stations (1 to 18) and then on to a take-up reel (24);

(c) as the core (12) is drawn through each winding station (1 to 18), forming the plurality of successive tubular layers (L) around the core (12) and temporarily maintaining the formed layers in their wound position before the latter are wound around the take-up reel (24); and

(d) providing the outer containment sleeve (14) around the outermost tubular layer (L8).

**Patentansprüche**

1. Ultrahochdruck-Schlauchaufbau (10), der 413,7 MPa (60.000 psi) überschreitende, innere Fluid-Dauerdrücke aushalten kann,

mit einem inneren röhrenförmigen Kern (12), der als Fluid-Trennwand wirkt,

mit einer Vielzahl von aufeinanderfolgenden röhrenförmigen Zwischenschichten (L1 bis L8), die Stahldrähte (W) aufweisen, welche wendelförmig um die und direkt an der unmittelbar darunter befindlichen Schicht mit vorgegebenen Wendelwinkeln ($\alpha$) gewickelt sind, um dadurch die Vielzahl von röhrenförmigen Schichten (L) zu bilden, wobei die Richtung der Wendel in aufeinanderfolgenden Schichten abwechselt und die Drähte (W) der aufeinanderfolgenden Schichten (L) – beginnend mit der innersten röhrenförmigen Schicht – aufeinanderfolgend zunehmende Wendelwinkel ($\alpha$) haben, und

mit einer äußeren Umkapselungshülse (14), welche die röhrenförmigen Schichten (L) enthält,

dadurch gekennzeichnet, daß die Stahldrähte (W) ebene gegenüberliegende Seiten haben,

daß jede röhrenförmige Schicht (L) einzelne Bänder (B) aufweist, wobei jedes Band (B) eine Anzahl von Stahldrähten (W) aufweist, die in unverbundener Rand-zu-Rand-Beziehung zur Bildung des Bandes aneinander angeordnet sind,

daß acht röhrenförmige Schichten (L) vorgesehen sind, die zu ihrer Identifizierung als Schichten Nr. 1 bis 8 beginnend mit der innersten Schicht bezeichnet sind,

daß das Band (B), welches jedes der acht röhrenförmigen Schichten (L) bildet, eine spezifische Anzahl von gesonderten Stahldrähten (W) wie folgt aufweist:

| Schicht | Drähte |
|---------|--------|
| 1 | 20 |
| 2 | 20 |
| 3 | 20 |
| 4 | 20 |
| 5 | 10 |
| 6 | 10 |
| 7 | 5 |
| 8 | 5 |

und daß das Band (B), das jede der acht röhrenförmigen Schichten (L) bildet, den folgenden Wendelwinkel ($\alpha$) hat (in Grad gerundet zum nächsten Zehntel eines Grads):

| Schicht | Wendelwinkel |
|---------|--------------|
| 1 | 39,0° |
| 2 | 44,8 |
| 3 | 48,9 |
| 4 | 51,6 |
| 5 | 73,2 |
| 6 | 75,2 |
| 7 | 82,1 |
| 8 | 83,5 |

2. Ultrahochdruck-Schlauchaufbau nach Anspruch 1, dadurch gekennzeichnet, daß wenigstens die Bänder (B) der Schichten (L) mit den Nummern 1 bis 6 wendelförmig im wesentlichen ohne Spalte zwischen den Windungen gewickelt sind.

3. Ultrahochdruck-Schlauchaufbau nach Anspruch 1 oder 2, dadurch gekennzeichnet, daß das Band (B) der Schichten mit den Nummern 7 und 8 wendelförmig mit Spalten zwischen den Windungen gewickelt sind, die wesentlich größer sind, als die Spalte zwischen den Windungen der Schichten mit den Nummern 1 bis 6.

4. Ultrahochdruck-Schlauchaufbau nach einem vorhergehenden Anspruch, dadurch gekennzeichnet, daß die Vielzahl der röhrenförmigen Schichten (L) eine vorgegebene Anzahl aufweist, die so gestaltet sind, daß spezifische Wendelwinkel ($\alpha$) gebildet werden, so daß der Gesamtberstdruck des Aufbaus 620,55 MPa (psi) übersteigt.

5. Ultrahochdruck-Schlauchaufbau nach einem vorhergehenden Anspruch, dadurch gekennzeichnet, daß die röhrenförmigen Schichten (L) so gestaltet sind, daß bei dem Betriebsdruck des Aufbaus die Zugspannung in den Drähten (W), die der Lagen (L) aufweisen, derart ist, daß nicht mehr als etwa 8% mittlerer Zugspannungsabfall zwischen benachbarten Schichten (L) vorhanden sind, wodurch alle Schichten (L) sich im wesentlichen in die Gesamtbelastung des Aufbaus bei seinem Betriebsdruck teilen.

6. Ultrahochdruck-Schlauchaufbau nach einem vorhergehenden Anspruch, dadurch gekennzeichnet, daß der Kern (12) aus Nylon, Polyropylen oder PTFE-Material und die Hülse aus einem Kunststoffmaterial aufgebaut sind.

7. Ultrahochdruck-Schlauchaufbau nach einem vorhergehenden Anspruch, dadurch gekennzeichnet, daß jeder der Drähte (W), die jedes der Bänder (B) bilden, eine Dicke von 0,3175 mm (0,0125 inch) und eine Breite von 0,8128 mm (32 mils) hat.

8. Verfahren zur Herstellung eines Ultrahochdruck-Schlauchaufbaus nach einem vorhergehenden Anspruch, welches folgende Schritte aufweist:

a) Bereitstellung des Kerns (12) und dessen Aufbringen auf einer Abwickelhaspel (16),

b) Ziehen des Kerns (12) durch eine Vielzahl von aufeinanderfolgenden Wickelstationen (1 bis 18) und dann auf eine Aufwickelhaspel (24),

c) beim Ziehen des Kerns (12) durch jede Wickelstation (1 bis 18) Ausbilden der Vielzahl von aufeinanderfolgenden röhrenförmigen Schichten (L) um den Kern (12) und vorübergehendes Halten der gebil-

11

deten Schichten in ihrer gewickelten Lage, ehe letztere um die Aufwickelhaspel (24) gewickelt werden und

d) Anbringen der äußeren Umkapselungshülse (14) um die äußerste röhrenförmige Schicht (L8).

**Revendications**

1. Ensemble de tuyau à pression ultra-élevée (10) capable de résister à des pressions internes de fluide soutenues dépassant 413,7 MPa (60 000 psi) l'ensemble comprenant:

un noyau tubulaire interne (12) qui fonctionne comme une barrière de fluide;

plusieurs couches tubulaires intermédiaires successives (L1 à L8) comprenant des fils d'acier (W) qui sont enroulés hélicoïdalement autour de la couche se trouvant immédiatement en dessous et directement contre celle-ci, à des angles d'hélice prédéterminés ($\alpha$) de manière à former les couches tubulaires (L), la direction de l'hélice étant alternée en couches successives, les fils (W) de couches successives (L) – en partant de la couche tubulaire la plus interne – définissant des angles d'hélice successivement croissants ($\alpha$); et

un manchon externe formant un récipient (14) qui contient les couches tubulaires (L);

caractérisé en ce que les fils d'acier (W) ont des côtés opposés plats;

en ce que chaque couche tubulaire (L) comprend des bandes individuelles (B), chaque bande (B) comprenant un certain nombre de fils d'acier (W) qui sont placés bord à bord sans être connectés l'un à l'autre de manière à former la bande;

en ce qu'il y a huit couches tubulaires (L) qui, dans un but d'identification, sont désignées comme les couches numérotées 1 à 8, en partant de la couche la plus interne;

en ce que la bande (B) formant chacune des huit couches tubulaires (L) comprend un nombre spécifique de fils d'acier séparés (W) comme suit:

| Couche | Fils |
|--------|------|
| 1 | 20 |
| 2 | 20 |
| 3 | 20 |
| 4 | 20 |
| 5 | 10 |
| 6 | 10 |
| 7 | 5 |
| 8 | 5 |

et en ce que la bande (B) formant chacune des huit couches tubulaires (L) définit un angle d'hélice ($\alpha$) (en degrés, arrondis au plus proche dixième de degré), comme suit:

| Couche | Angle d'hélice |
|--------|----------------|
| 1 | 39,0° |
| 2 | 44,8 |
| 3 | 48,9 |
| 4 | 51,6 |
| 5 | 73,2 |
| 6 | 75,2 |
| 7 | 82,1 |
| 8 | 83,5 |

2. Ensemble de tuyau à pression ultra-élevée selon la revendication 1, caractérisé en ce qu'au moins les bandes (B) des couches (L) numérotées 1 à 6 sont enroulées helicoïdalement sensiblement sans aucun intervalle entre les spires.

3. Ensemble de tuyau à pression ultra-élevée selon la revendication 1 ou la revendication 2, caractérisé en ce que la bande (B) des couches numérotées 7 et 8 est enroulée hélicoïdalement avec sensiblement des intervalles plus grands entre les spires que les intervalles entre les spires des couches numérotées 1 à 6.

4. Ensemble de tuyau à pression ultra-élevée selon l'une quelconque des revendications précédentes, caractérisé en ce que les couches tubulaires (L) comprennent un nombre prédéterminé de couches qui sont formées de manière à définir des angles spécifiques d'hélice (α) de sorte que la pression globale d'éclatement de l'ensemble dépasse 620,55 MPa (90 000 psi).

5. Ensemble de tuyau à pression ultra-élevée selon l'une quelconque des revendications précédentes, caractérisé en ce que les couches tubulaires (L) sont formées de manière qu'à la pression de fonctionnement de l'ensemble, la tension dans les fils (W) comprenant chacune des couches (L) soit telle qu'il n'y ait pas plus qu'environ 8% de chute moyenne dans la tension entre des couches adjacentes (L), de sorte que toutes les couches (L) se partagent sensiblement la charge globale de l'ensemble à sa pression de fonctionnement.

6. Ensemble de tuyau à pression ultra-élevée selon l'une quelconque des revendications précédentes, caractérisé en ce que le noyau (12) est construit en une matière du type "Nylon", polypropylène ou PTFE et le manchon est construit en matière plastique.

7. Ensemble de tuyau à pression ultra-élevée selon l'une quelconque des revendications précédentes, caractérisé en ce que chacun des fils (W) formant chacune des bandes (B) a une épaisseur de 0,3175 mm (0,0125 inch) et une largeur de 0,8128 mm (32 mils).

8. Procédé pour fabriquer un ensemble de tuyau à pression ultra-élevée selon l'une quelconque des revendications précédentes, comprenant les étapes consistant à:

(a) prévoir le noyau (12) et supporter ce dernier sur une bobine dévideuse (16);

(b) tirer le noyau (12) à travers plusieurs stations successives d'enroulement (1 à 18) et ensuite le mettre sur une bobine d'enroulement (24);

(c) à mesure que le noyau (12) est tiré à travers chacune des stations d'enroulement (1 à 18), former les couches tubulaires successives (L) autour du noyau (12) et maintenir temporairement les couches formées dans leur position d'enroulement avant que ces dernières soient enroulées autour de la bobine réceptrice (24); et

(d) prévoir le manchon externe formant récipient (14) autour de la couche tubulaire 1 plus externe (L8).

FIG. —1

FIG. —2A

FIG. —2B

FIG.—2C

FIG. —3

PAY-OUT REEL

WINDING STATIONS 1 TO 8

HAUL-OFF

TAKE-UP REEL

FIG. —4